# EUROPÄISCHE PATENTSCHRIFT

(11) **EP 0 561 857 B1**
(45) Veröffentlichungstag und Bekanntmachung des Hinweises auf die Patenterteilung: **13.09.1995**
(21) Anmeldenummer: 92900183.2
(22) Anmeldetag: 09.12.1991
(51) Int. Cl.: B01D 29/41, B01D 29/90

(54) **ZENTRIFUGALREINIGUNGSFILTER**
CENTRIFUGAL CLEANING FILTER
FILTRE EPURATEUR CENTRIFUGE

(30) Priorität: 13.12.1990 DE 4039890
(43) Veröffentlichungstag der Anmeldung: 29.09.1993
(73) Patentinhaber: ANTON STEINECKER ENTWICKLUNGS GmbH & Co., D-85318 Freising (DE)
(72) Erfinder: REDL, Simon, D-8301 Reichertshausen (DE); SCHNEIDER, Adolf, D-7170 Schwäbisch Hall (DE)
(74) Vertreter: Grünecker, Kinkeldey, Stockmair & Schwanhäusser Anwaltssozietät
(86) Internationale Anmeldenummer: EP9102355
(87) Internationale Veröffentlichungsnummer: WO9210267

(56) Entgegenhaltungen:
- BE-A- 632 206
- US-A- 3 240 344

## Beschreibung

Die Erfindung betrifft einen Zentrifugalreinigungsfilter, der im Oberbegriff des Anspruchs 1 angegebenen Art Aus der BE-A-632 206 ist ein Zentrifugalfilter der eingangs genannten Art bekannt. Hierbei sind mehrere Filterscheiben im wesentlichen horizontal mit Abstand zueinander in einem Filterbehälter angeordnet. Es sind über den Umfang der Filterscheiben verteilt mehrere das Unfiltrat zuführende Verteilerleitungen vorgesehen, wobei bei zumindest einer Austrittsöffnung je Verteilerleitung oberhalb einer Filterscheibe insgesamt mehrere über den Umfang verteilte Austrittsöffnungen auf jede Filterscheibe münden.

Ein anderer Zentrifugalreinigungsfilter ist aus der DE-OS 18 12 495 bekannt. Dieser Filter weist ein Gehäuse mit kreisrunden Horizontalquerschnitten auf, in dessen lotrechter Mittelachse eine Hohlwelle vorgesehen ist. Auf der Hohlwelle sind übereinander in gleichmäßigen Abständen kreisscheibenförmige Filterscheiben in horizontalen Ebenen angeordnet. Die Hohlwelle ist im Deckel des Gehäuses in einem Lager drehbar gelagert. Das untere Ende der Hohlwelle ist durch den Behälterboden aus dem Behälter herausgeführt und mit einer Antriebseinrichtung verbunden. Im Boden des Behälters ist auf einer Seite der Hohlwelle eine Auslaßöffnung vorgesehen. Als Verteilerleitungen für die Zuführung von Unfiltrat sind am Mantel des Behälters gleichmäßig über den Umfang verteilt im wesentlich vertikal verlaufende Kanäle vorgesehen, die durch Halbrohre ausgebildet sind, welche mit ihren Randzonen an der Außenseite des Behälters befestigt sind. Im Bereich jedes der lotrechten Kanäle sind in der Wandung des Behälters düsenartige Öffnungen vorgesehen, wobei sich jeweils oberhalb der Filterscheiben mindenstens eine Düsenöffnung für den Austritt und die Zuführung von Unfiltrat zu den Filterscheiben befindet. Die Düsenöffnungen sind jeweils etwa im oberen Drittel zwischen zwei benachbarten Filterscheiben vorgesehen.

Aus der DE 35 29 706 C2 ist ein Filter bekannt, der scheibenförmige Filterelemente aufweist, die in ihrem Zentrum von einer Drehachse durchstoßen werden, um welche die gesamte Filteranordnung drehbar ist. Nahe der Drehachse sind verteilt über einen Kreisumfang vertikale, mit der drehbaren Filteranordnung verbundene Verteilerleitungen für die Zuführung von zu filtrierender Flüssigkeit (Unfiltrat) vorgesehen. Von den Verteilerleitungen zweigen Zuleitungen für die Zuführung von Unfiltrat zu den einzelnen Filterelementen ab. Die Zuleitungen für ein bestimmtes Filterelement enden jeweils in einem Ringraum, der zwischen einer filterscheibenparallelen Verteilerplatte und der Unterseite eines jeweils über der Zuleitung liegenden Filterelements gebildet ist. Die Oberseite des Filterelements weist eine Filtergewebeschicht aus Edelstahl auf, die auf einer die Unterseite des Filterelements bildenden flüssigkeitsundurchlässigen Platte aufliegt. Die durch das Filtergewebe gefilterte Flüssigkeit (Filtrat) läuft auf der Platte zum Zentrum hin ab, wo entsprechende Abflußkanäle vorgesehen sind. Im Filterbetrieb tritt das durch die vertikalen Verteilerleitungen unter Druck zugeführte Unfiltrat durch die Zuführungen in die Ringräume ein und wird durch die Verteilerplatten jeweils über die Oberseite des darunter liegenden Filterelements verteilt. Dem Unfiltrat beigemischte Filterhilfsmittel, wie z. B. Kieselgur setzen sich dabei unter Bildung einer filternden Anschwemmung auf dem Filtergewebe des Filterelements ab. Die nach einer bestimmten Betriebsdauer mit Filterrückständen zugesetzte Anschwemmung wird durch Drehung der Filteranordnung um die Drehachse von den Filterelementen abgeschleudert.

Es ist die Aufgabe der vorliegenden Erfindung, einen Zentrifugalreinigungsfilter der eingangs genannten Art zu schaffen, der gegenüber dem beschriebenen, aus dem Stand der Technik bekannten Filter dieser Art in seiner Leistungsfähigkeit verbessert ist.

Der diese Aufgabe lösende erfindungsgemäße Filter ist durch die Merkmale des Anspruchs 1 gekennzeichnet.

Durch diese erfindungsgemäße Lösung wird gewährleistet, daß das Unfiltrat und insbesondere mitgeführte Filterhilfsmittel in hohem Maße gleichmäßig auf den Filterscheiben verteilt werden. Diese gleichmäßige Verteilung wird dadurch erreicht, daß durch die Kammern beruhigte Ströme von Unfiltrat über den Umfangsrand der Filterscheiben verteilt peripher zugeführt werden, wobei eine Abnahme der zur Verfügung stehenden Belegungsmenge an Unfiltrat bzw. Filterhilfsmitteln in Richtung zur Filtermitte, die u.a. infolge vorheriger Ablagerungen des Materials in den Außenbereichen der Filterscheibe auftritt, dadurch ausgeglichen wird, daß die zu belegenden Flächen nach innen zu kleiner werden. Durch die gleichmäßigere Verteilung des Unfiltrats werden höhere Durchsatzmengen erreicht, indem insbesondere das Abschleudern der zugesetzten Filterhilfsmittelbeläge in größeren Intervallen erfolgen kann.

In vorteilhafter Ausgestaltung der Erfindung ist vorgesehen, daß die Verbindungsöffnung in der Strömungsberuhigungskammer in möglichst großer Entfernung von der Austrittsöffnung vorgesehen ist. Durch diese Maßnahme wird ein besonders hoher Beruhigungsgrad der Strömung des unter Druck stehenden Unfiltrats erzielt. Insbesondere wird die Bildung von Wirbeln, durch die die Filteranschemmungen stellenweise weggeschwemmt werden könnten, verhindert.

In weiterer vorteilhafter Ausgestaltung der Erfindung kann vorgesehen sein, daß wenigstens eine Austrittsöffnung knapp unterhalb der nächst höher gelegenen Filterscheibe angeordnet ist. Durch diese Maßnahme wird eine besonders gleichmäßige Verteilung des Unfiltrats auf der Filterscheibe erreicht.

Eine weitere vorteilhafte Ausgestaltungsmöglichkeit der Erfindung besteht darin, wenigstens eine Austrittsöffnung für den Austritt des Unfiltrats unter einem Winkel schräg zur Tangente des Umfangsrandes der Filterscheibe vorzusehen. Diese Maßnahme dient zur weiteren Erhöhung der Gleichmäßigkeit der Verteilung des Unfiltrats auf der Filterscheibe.

In einer bevorzugten Ausführungsform für die Erfindung ist vorgesehen, daß die Verteilerleitungen ein mit einem Leitungskanal versehenes Profil aufweisen. Insbesondere weist das Profil wenigstens eine an den Leitungskanal angrenzende Längsausnehmung auf, in welcher eine dazu im Querschnitt angepaßte, Strömungsberuhigungskammern bildende Aussparungen aufweisende Profilleiste angeordnet ist.

In einem weiteren bevorzugten Ausführungsbeispiel für die Erfindung ist vorgesehen, daß die Verteilerleitungen Segmente aufweisen, die vorzugsweise mit den Filterscheiben verbunden sind. Vorteilhaft können die Verteilerleitungen durch Zusammensetzung der Filterelemente zu einer Filteranordnung aus mit den Filterelementen verbundenen Segmenten zusammenfügbar sein.

Weitere vorteilhafte Ausgestaltungsmöglichkeiten der Erfindung und bevorzugte Ausführungsformen der Erfindung gehen aus den Unteransprüchen hervor.

Die Erfindung soll nun anhand von Ausführungsbeispielen und der sich auf diese Ausführungsbeispiele beziehenden Zeichnungen näher erläutert und beschrieben werden. Es zeigen:
- Fig.1: ein Ausführungsbeispiel für einen erfindungsgemäßen Zentrifugalreinigungsfilter,
- Fig.2: eine im Ausführungsbeispiel gemäß Figur 1 verwendete Verteilerleitung in einer Seitenansicht,
- Fig.3: die Verteilerleitung gemäß Figur 2 in einer Draufsicht,
- Fig.4: ein weiteres Ausführungsbeispiel für einen erfindungsgemäßen Zentrifugalreinigungsfilter (ausschnittsweise) mit einer an der Wand des Filterbehälters befestigten Verteilerleitung,
- Fig.5: die Verteilerleitung von Figur 4 in einer zu der Ansicht gemäß Figur 4 senkrechten Seitenansicht (ausschnittsweise), und
- Fig.6: das Ausführungsbeispiel gemaß Figur 4 in einer Draufsicht (ausschnittsweise).

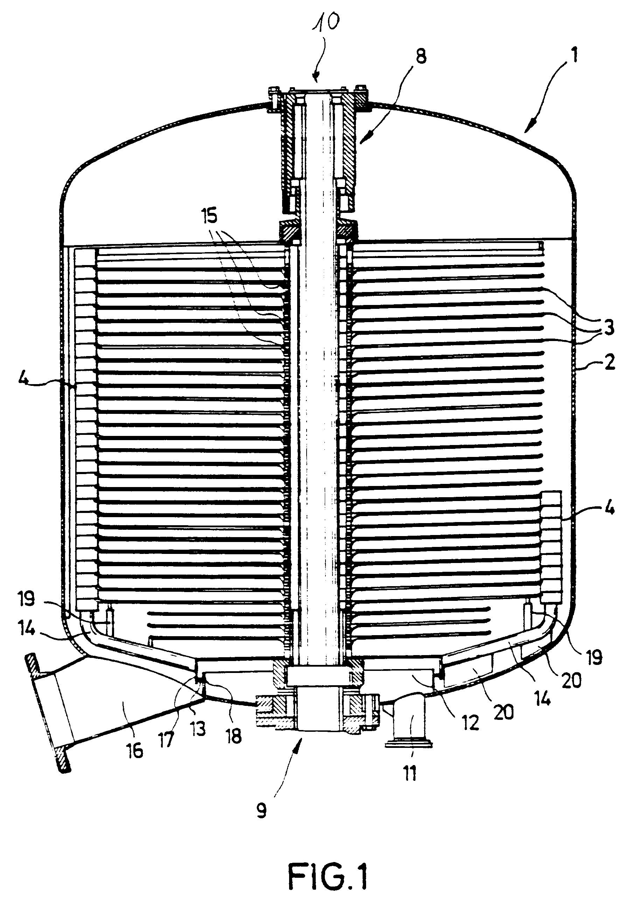

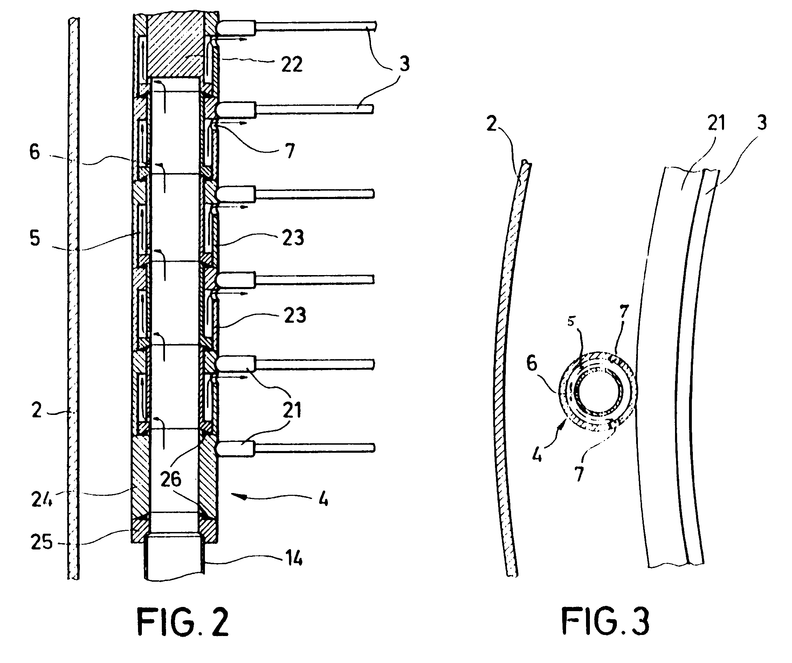

In der Figur 1 ist mit dem Bezugszeichen 1 ein Filterbehälter mit einer Behälterwand 2 bezeichnet. Innerhalb des Behälters 1 befindet sich eine Anordnung von scheibenförmigen Filterelementen 3, die übereinanderliegend und zueinander in gleichem vertikalen Abstand vorgesehen sind. Die zu der gezeigten Filteranordnung zusammensetzbaren Filterelemente, die in ihrem Zentrum eine Öffnung aufweisen, sind mit über ihren Umfangsrand verteilten Segmenten versehen, durch die beim Zusammensetzen der Filterelemente zu der Filteranordnung Verteilerleitungen 4 gebildet werden. Diese Verteilerleitungen werden später anhand der Figuren 2 und 3 genauer beschrieben. Die Anordnung aus den Filterelementen 3 ist mit einer in Lagerungen 8 und 9 gelagerten, durch die Zentrumsöffnungen der Filterelemente geführten Drehachse 10 verbunden, so daß die gesamte Anordnung zusammen mit der Drehachse, die über einen in der Figur 1 nicht gezeigten Motor antreibbar ist, gedreht werden kann. Die Filterelemente 3 bestehen jeweils aus einer oberen Lage aus einem Filtergewebe, z. B. aus Edelstahl, und einer unteren undurchlässigen Lage, auf der das Filtrat zum Scheibenzentrum hin ablaufen und durch Kanäle 15 nahe der Drehachse in den unteren Teil des Innenraums des Filterbehälters abfließen und schließlich durch den Auslaß 16 des Filterbehälters aus dem Filterbehälter austreten kann.

Mit dem Bezugszeichen 11 ist in der Figur 1 ein Einlaß für zu filtrierende Flüssigkeit (Unfiltrat) bezeichnet, der in einen Verteilungsraum 12 mündet. Der Verteilungsraum weist ein zusammen mit der Drehachse und der Filteranordnung drehbares Gehäusewandteil 17 auf, an das sich über dessen Umfang verteilt Zuleitungen 14 für die durch die Segmente gebildeten Verteilerleitungen 4 anschließen. Das drehbare Gehäusewandteil 17 ist durch eine Ringdichtung 13 gegen einen feststehenden unteren Teil 18 des den Verteilerraum 12 bildenden Gehäuses abgedichtet. Der untere Gehäuseteil 18 ist mit der Wand des Filterbehälters verbunden, wobei die Wand des Filterbehälters den Verteilerraum 12 nach unten hin abschließt. Mit 19 sind Stützelemente zur Stabilisierung der Zuleitungen 14 bezeichnet, die an einem Ende mit den Zuleitungen und an ihrem anderen Ende mit einem Filterelement verbunden sind. An den Zuleitungen 14 sind Austragselemente 20 zum Austragen von Filterhilfsmitteln aus dem Filterbehälter vorgesehen.

Aus den Fig. 2 und 3, in denen gleiche Teile mit den gleichen Bezugszeichen wie in der Figur 1 bezeichnet sind, geht hervor, daß die die Leitung 4 bildenden Verteilersegmente 23 jeweils eine aus zwei Lagen bestehende Wandung aufweisen, wobei die Lagen mit Ausnehmungen zur Bildung eines Ringraums 5 versehen sind. Der jeweilige Ringraum 5 der Segmente ist jeweils über eine Verbindungsöffnung 6 mit dem Inneren der durch die Segmente gebildeten Verteilerleitung 4 verbunden. Die Ringräume 5 weisen jeweils in der den Filterelemente 3 zugewandten Hälfte Austrittsöffnungen 7 auf, die im vorliegenden Ausführungsbeispiel jeweils unmittelbar unterhalb desjenigen Filterelements 3 angeordnet sind, mit dem das jeweilige Segment verbunden ist. Die Durchlaßquerschnitte der Austrittsöffnungen sind im vorliegenden Ausführungsbeispiel beide größer als der Durchlaßquerschnitt der Verbindungsöffnung vorgesehen.

Im vorliegenden Ausführungsbeispiel sind die Segmente mit den Filterelementen 3 über auf dem Umfangsrand der Filterelemente vorgesehene Spannringe 21 zur Stabilisierung der Filterelemente, z. B. durch Schweißungen, verbunden.

An dem untersten Filterelement ist ein Segment 24 befestigt, dem kein mit Unfiltrat zu beschickendes Filterelement mehr zugeordnet und in dem demzufolge kein Ringraum vorgesehen ist. Das Segment 24 sitzt auf einem mit dem Verteilerrohr 14 verbundenen Adapterstück 25 auf. In das mit dem obersten Filterelement verbundene Segment ist ein Verschlußteil 22 zum Abschließen der Verteilerleitung 4 nach oben eingesetzt.

Mit 26 sind zwischen den einzelnen Segmenten angeordnete Dichtungsringe bezeichnet.

Die Verteilerleitungen 4 entstehen bei der Zusammensetzung der Filteranordnung aus den Filterelemente 3, indem an jedem Filterelement über seinen Umfang verteilt in der gleichen Anordnung Segmente 23 befestigt sind. Im vorliegenden Ausführungsbeispiel sind die ringförmigen Stoßflächen zwischen den einzelnen Segmenten zur Längsachse der Verteilerleitungen 4 geneigt, wodurch eine zentrierende Wirkung beim Zusammensetzen der Filterelemente mit den daran befestigten Segmenten erzielt wird. Durch die in den Stoßbereichen vorgesehenen Dichtungsringe 26 wird eine wirksame Abdichtung der Verteilerleitungen 4 erzielt. Zur wirksamen Abdichtung der um die Filteranordnung herum vorgesehenen Verteilerleitungen kann auch eine geeignet gewählte, auf die Ober- und Unterseite der Filteranordnung einwirkende, die Filteranordnung zusammenhaltende Spannkraft dienen. Die Segmente üben innerhalb der Filteranordnung zusätzlich vorteilhaft die Funktion von Distanzelementen aus.

Im Filterbetrieb tritt das Unfiltrat (bzw. bei der Betriebsvorbereitung Wasser mit Filterhilfsmitteln) durch den Einlaß 11 in den Verteilerraum 12 ein und wird über die in den Verteilerraum 12 einmündenden Zuleitungen 14 den Verteilerleitungen 4 zugeleitet. Die Strömungsgeschwindigkeit kann hier je nach Filtergrößen von 20 bis 60 m² zwischen 0,8 und 3,4 m/s betragen. Das unter Druck stehende Unfiltrat tritt über die Verbindungsöffnungen 6 in die Ringräume 5 ein, wo einer Beruhigung der Strömung des Unfiltrats mit einer Verringerung der Strömungsgeschwindigkeit auf Werte zwischen 0,05 und 0,075 m/s eintritt, und die zu filtrierende Flüssigkeit tritt durch die im Querschnitt größeren Austrittsöffnungen 7 jeweils unterhalb des mit dem jeweiligen Segment verbundenen Filterelements aus den Ringkammern 5 aus, wobei es zu einer gleichmäßigen Verteilung des Unfiltrats bzw. eines mit dem Unfiltrat mitgeführten Filterhilfsmittels auf dem unterhalb der Austrittsöffnung gelegenen Filterelement kommt. Das durch das Filtergewebe der Filterplatten und das abgelagerte Filterhilfsmittel, z. B. Kieselgur, getretene Filtrat läuft auf der undurchlässigen, die Unterseite der Filterelemente bildenden Platte zum Zentrum der Filterelemente hin ab und tritt durch die Öffnungen 15 in den freien Innenraum des Filterbehälters ein, aus dem es durch den Austritt 16 austreten kann. Nach einer bestimmten Betriebsdauer kann die Filteranordnung durch Drehen um die Drehachse gereinigt werden, wobei Filterhilfsmittel und Filterrückstände abgeschleudert und mit Hilfe der Austragseinrichtung 20 durch den Auslaß 16 aus dem Filterbehälter entfernt werden.

Durch die gezeigte Anordnung der Verteilerleitungen mit den Ringkammern, über die das Unfiltrat den Filterelementen peripher und über deren Umfang verhältnismäßig gleichmäßig verteilt zugeleitet wird, wobei durch die Ringkammern eine Beruhigung der Strömung erfolgt, wird eine gleichmäßige Verteilung des Unfiltrats bzw. mitgeführter Filterhilfsmittel auf den Filterscheiben erreicht, indem die durch Materialablagerung in den Außenbereichen der Filterscheiben zum Zentrum hin abnehmende Materialzufuhr dadurch ausgeglichen wird, daß die zu belegende Filteroberfläche weiter innen geringer wird. Eine besonders gleichmäßige Verteilung wird erreicht, wenn, wie im vorliegenden Ausführungsbeispiel, die Austrittsöffnung so weit wie möglich oberhalb der zugeordneten Filterscheibe, d. h. knapp unterhalb der darüber liegenden Filterscheibe, angeordnet wird. Besonders vorteilhaft in Bezug auf die Gleichmäßigkeit der Materialverteilung wirkt es sich auch aus, wenn, wie im vorliegenden Ausführungsbeispiel, Austrittsöffnungen so vorgesehen sind, daß das Unfiltrat aus den Austrittsöffnungen unter einem Winkel schräg zur Tangente an die Filterscheibe austritt und z. B. zwei symmetrisch zu einer Senkrechten auf die Tangente angeordnete Austrittsöffnungen vorgesehen sind. Eine besonders effektive Beruhigungswirkung der Strömung des Unfiltrats wird erreicht, indem, wie im vorliegenden Ausführungsbeispiel, die Verbindungsöffnung 6 der im vorliegenden Ausführungsbeispiel als Ringraum ausgebildeten Strömungsberuhigungskammern so weit wie möglich von den Austrittsöffnungen entfernt vorgesehen wird, wobei sich die Kammer vorteilhaft über die gesamte zwischen zwei Filterscheiben ausnutzbare Lange erstreckt.

Bei dem Ausführungsbeispiel gemäß den Fig. 1 bis 3 sind für die drei untersten Filterscheiben keine Segmente mit Austrittsöffnungen vorgesehen.

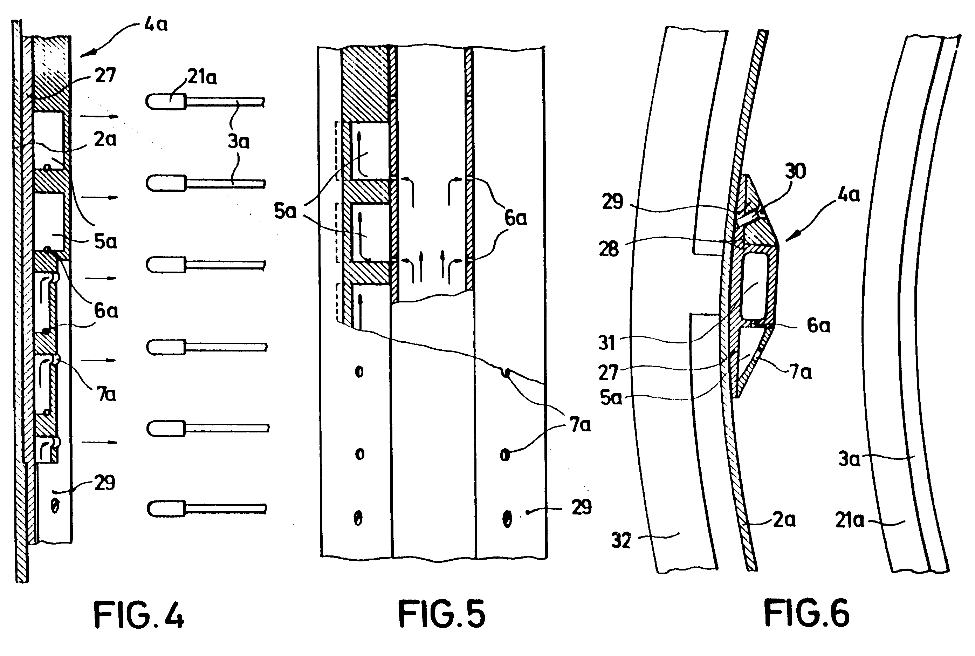

In den Figuren 4 bis 6 sind gleiche oder gleichwirkende Teile mit den gleichen, jedoch mit dem Index a versehenen Bezugszahlen wie in den vorangegangenen Figuren bezeichnet.

Das in den Figuren 4 bis 6 dargestellte Ausführungsbeispiel unterscheidet sich von dem Ausführungsbeispiel gemäß den Figuren 1 bis 3 vor allem darin, daß die Verteilerleitungen 4a fest mit der Behälterwand, z. B. durch Schweißen, verbunden und von der drehbaren Filteranordnung losgelöst angeordnet sind.

Mit 27 ist in den Figuren 4 bis 6 ein Profil zur Bildung von Verteilerleitungen 4a mit einem Leitungskanal 31 bezeichnet, wobei solche Profile über den Umfang einer aus Filterelementen 3a gebildeten Filteranordnung verteilt angeordnet sind. Die Profilschiene 27 weist zu beiden Seiten der den Kanal 31 bildenden Seitenwände Längsausnehmungen in Form rechtwinkeliger Nischen auf, in der im Querschnitt dreieckförmige Längsschienen 29 angeordnet und mit Schrauben 30 befestigt sind. In den Längsschienen 29 sind Ausnehmungen vorgesehen, durch die Strömungsberuhigungskammern 5a gebildet sind, wobei eine Abdichtung dieser Kammern über die gegeneinander anliegenden Dichtflächen 28 der Längsschiene 29 und des Profils 27 erfolgt. Anstelle durchgehender Schienen könnten auch jeweils nur zur Bildung einer oder einer bestimmten Anzahl von Kammern vorgesehene Schienensegmente verwendet werden. Mit 32 ist in der Figur 6 eine außerhalb des Filterbehälters vorgesehene ringförmige, horizontale Verteilungsleitung für Unfiltrat bezeichnet, die mit dem Leitungskanal 31 der einzelnen über den Umfang der Filteranordnung verteilten Verteilerleitungen 4a in Verbindung steht.

Im Filterbetrieb wird das Unfiltrat über diese Leitung 32 zugeführt, gelangt in die Kanäle 31 und wird zur Beruhigung der Strömung zunächst über die Verbindungsöffnungen 6a in die Kammern 5a und dann durch die Austrittsöffnungen 7a aus den Kammern 5a jeweils knapp unterhalb des nächsthöhergelegenen Filterelements herausgeführt. Bei dem Ausführungsbeispiel gemäß den Figuren 4 bis 6 sind je Filterelement und Verteilerleitung zwei Strömungsberuhigungskammern mit jeweils einer Austrittsöffnung 7a vorgesehen, wobei das Unfiltrat durch diese Austrittsöffnung in Bezug auf die Tangente der Filterelement in ähnlich ausgerichteter Weise wie bei dem Ausführungsbeispiel gemäß der Figuren 1 bis 3 antritt. Ebenso ist dafür gesorgt, daß der Abstand zwischen den Verbindungsöffnungen 6a und den Austrittsöffnungen 7a möglichst groß ist.

## Patentansprüche

1. Zentrifugalreinigungsfilter mit vertikal übereinander auf einer Drehachse (10) beabstandeten, horizontal in einem Filterbehälter (1) angeordneten Filterscheiben (3), die eine als Filterfläche dienende durchlässige Oberseite und eine undurchlässige zum Auffangen und Ableiten des Filtrats dienende untere Lage aufweisen, mit über den Umfang der Filterscheiben (3) verteilt angeordneten, das Unfiltrat in einer Hauptrichtung von unten nach oben zuführenden Verteilerleitungen (4), von denen jede oberhalb zumindest einer Filterscheibe (3) wenigstens eine Austrittsöffnung (7) aufweist, wobei aber auf jede Filterscheibe (3) mehrere über den Umfang verteilte Austrittsöffnungen (7) münden,
**dadurch gekennzeichnet**, daß
außen an jeder Verteilerleitung (4) mindestens eine sich zumindest entlang eines Teils des Umfangs der Verteilerleitung (4) erstreckende Strömungsberuhigungskammer (5) angebracht ist, von der Verteilerleitung (4) wenigstens eine Verbindungsöffnung (6) in die Strömungsberuhigungskammer (5) mündet und die mindestens eine Austrittsöffnung (7) von der Strömungsberuhigungskammer (5) ausgeht, wodurch das Unfiltrat nur über die Strömungsberuhigungskammer (5) von der Verteilerleitung (4) auf die Filterscheibe (3) strömen kann.

2. Zentrifugalreinigungsfilter nach Anspruch 1, **dadurch gekennzeichnet**, daß die Verteilerleitungen (4) vertikal verlaufen.

3. Zentrifugalreinigungsfilter nach Anspruch 1 oder 2, **dadurch gekennzeichnet**, daß die Verteilerleitungen (4) mit der Behälterwand (2) verbunden sind.

4. Zentrifugalreinigungsfilter nach einem der Ansprüche 1 bis 2, **dadurch gekennzeichnet**, daß die Verteilerleitungen (4) mit den Filterscheiben verbunden sind.

5. Zentrifugalreinigungsfilter nach einem der Ansprüche 1 bis 4, **dadurch gekennzeichnet**, daß die Verteilerleitungen mit den Filterscheiben verbundene Segmente (23) aufweisen.

6. Zentrifugalreinigungsfilter nach Anspruch 5, **dadurch gekennzeichnet**, daß die Verteilerleitungen (4) durch Zusammensetzung der Filterscheibe (3) zu einer Filterscheibenanordnung aus mit den Filterscheiben verbundenen Segmenten (23) zusammenfügbar sind.

7. Zentrifugalreinigungsfilter nach einem der Ansprüche 5 bis 6, **dadurch gekennzeichnet**, daß an den Stoßstellen zwischen den Segmenten (23) Dichtungsringe (26) vorgesehen sind.

8. Zentrifugalreinigungsfilter nach einem der Ansprüche 5 bis 7, **dadurch gekennzeichnet**, daß die Segmente (23) wenigstens eine Strömungsberuhigungskammer (5a) aufweisen.

9. Zentrifugalreinigungsfilter nach wenigstens einem der Ansprüche 1 bis 8, **dadurch gekennzeichnet**, daß die Strömungsberuhigungskammer als Ringraum (5a) um die Verteilerleitung (4) angeordnet ist.

10. Zentrifugalreinigungsfilter nach wenigstens einem der Ansprüche 1 bis 9, **dadurch gekennzeichnet**, daß die Verteilerleitungen (4) einen kreisförmigen Querschnitt aufweisen.

11. Zentrifugalreinigungsfilter nach wenigstens einem der Ansprüche 1 bis 10, **dadurch gekennzeichnet**, daß die Verteilerleitungen (4) aus einem Profilkörper (27) gebildet ist, der einen Leitungskanal (31) für das Unfiltrat aufweist.

12. Zentrifugalreinigungsfilter nach Anspruch 11, **dadurch gekennzeichnet**, daß der Profilkörper (27) wenigstens eine an seinen Leitungskanal (31) angrenzende Längsausnehmung aufweist, in welcher eine dazu im Querschnitt angepaßte, Strömungsberuhigungskammern (5a) bildende Aussparungen aufweisende Profilleiste (29) angeordnet ist.

13. Zentrifugalreinigungsfilter nach Anspruch 12, **dadurch gekennzeichnet**, daß die Längsausnehmung bzw. die Profilleiste einen dreieckigen Querschnitt aufweist.

14. Zentrifugalreinigungsfilter nach einem der Ansprüche 1 bis 13, **dadurch gekennzeichnet**, daß wenigstens eine Austrittsöffnung (7) in der Strömungsberuhigungskammer der Verteilerleitung (4) oberhalb der Verbindungsöffnung (6) angeordnet ist.

15. Zentrifugalreinigungsfilter nach einem der Ansprüche 1 bis 14, **dadurch gekennzeichnet**, daß wenigstens eine Austrittsöffnung für einen Austritt des Unfiltrats unter einem Winkel schräg zur Tangente des Umfangsrands der Filterscheibe vorgesehen ist.

16. Zentrifugalreinigungsfilter nach einem der Ansprüche 1 bis 15, **dadurch gekennzeichnet**, daß zwei Austrittsöffnungen je Strömungsberuhigungskammer vorgesehen sind.

17. Zentrifugalreinigungsfilter nach Anspruch 16, **dadurch gekennzeichnet**, daß die beiden Austrittsöffnungen symmetrisch in bezug auf eine Radiuslinie der Filterscheibe angeordnet sind.

18. Zentrifugalreinigungsfilter nach einem der Ansprüche 1 bis 17, **dadurch gekennzeichnet**, daß die Verbindungsöffnung (6) in der Strömungsberuhigungskammer in möglichst großem Entfernung zu der Austrittsöffnung (7) vorgesehen ist.

19. Zentrifugalreinigungsfilter nach einem der Ansprüche 1 bis 18, **dadurch gekennzeichnet**, daß der durch wenigstens eine Austrittsöffnung (7) gebildete Durchlaßquerschnitt großer als der durch die wenigstens eine Verbindungsöffnung (6) gebildete Durchlaßquerschnitt ist.

20. Zentrifugalreinigungsfilter nach einem der Ansprüche 1 bis 19, **dadurch gekennzeichnet**, daß wenigstens eine Austrittsöffnung (7) knapp unterhalb der nächsten höhergelegenen Filterscheibe angeordnet ist.

21. Zentrifugalreinigungsfilter nach einem der Ansprüche 17 bis 20, **dadurch gekennzeichnet**, daß das Unfiltrat aus den beiden Austrittsöffnungen unter in bezug auf die Radiuslinie der Filterscheiben entgegengesetzten Winkeln austritt.

## Claims

1. Centrifugal cleaning filter, having filter discs (3), which are spaced vertically apart one above another on a rotational axis (10) and are arranged horizontally in a filter container (1) and which exhibit a permeable top side serving as a filter surface and an impermeable lower layer serving to collect and lead off the filtrate, having distributor lines (4), which are scattered over the periphery of the filter discs (3) and supply the non-filtrate in a principal direction from the bottom upwards and each of which exhibits, above at least one filter disc (3), at least one escape opening (7), there emerging onto each filter disc (3), however, a plurality of escape openings (7) scattered over the periphery, characterized in that on the outside of each distributor line (4) there is fitted at least one flow-moderating chamber (5) extending at least along part of the periphery of the distributor line (4), from the distributor line (4) at least one connecting opening (6) emerges into the flow-moderating chamber (5) and the at least one escape opening (7) originates from the flow-moderating chamber (5), as a result of which the non-filtrate is only able to flow from the distributor line (4) onto the filter disc (3) via the flow-moderating chamber (5).

2. Centrifugal cleaning filter according to Claim 1, characterized in that the distributor lines (4) run vertically.

3. Centrifugal cleaning filter according to Claim 1 or 2, characterized in that the distributor lines (4) are connected to the container wall (2).

4. Centrifugal cleaning filter according to one of Claims 1 to 2, characterized in that the distributor lines (4) are connected to the filter discs.

5. Centrifugal cleaning filter according to one of Claims 1 to 4, characterized in that the distributor lines exhibit segments (23) connected to the filter discs.

6. Centrifugal cleaning filter according to Claim 5, characterized in that the distributor lines (4) can be joined together by an amalgamation of the filter discs (3) to form a filter disc arrangement composed of segments (23) connected to the filter discs.

7. Centrifugal cleaning filter according to one of Claims 5 to 6, characterized in that at the joints between the segments (23) there are provided sealing rings (26).

8. Centrifugal cleaning filter according to one of Claims 5 to 7, characterized in that the segments (23) exhibit at least one flow-moderating chamber (5a).

9. Centrifugal cleaning filter according to at least one of Claims 1 to 8, characterized in that the flow-moderating chamber is arranged as an annular space (5a) around the distributor line (4).

10. Centrifugal cleaning filter according to at least one of Claims 1 to 9, characterized in that the distributor lines (4) exhibit a circular cross-section.

11. Centrifugal cleaning filter according to at least one of Claims 1 to 10, characterized in that the distributor lines (4) are formed from a profile body (27) exhibiting a duct (31) for the non-filtrate.

12. Centrifugal cleaning filter according to Claim 11, characterized in that the profile body (27) exhibits at least one longitudinal recess contiguous with its duct (31), in which longitudinal recess there is disposed a profile moulding (29) exhibiting cavities which are matched to the longitudinal recess in cross-section and form flow-moderating chambers (5a).

13. Centrifugal cleaning filter according to Claim 12, characterized in that the longitudinal recess or the profile moulding exhibits a triangular cross-section.

14. Centrifugal cleaning filter according to one of Claims 1 to 13, characterized in that at least one escape opening (7) is disposed in the flow-moderating chamber of the distributor line (4) above the connecting opening (6).

15. Centrifugal cleaning filter according to one of Claims 1 to 14, characterized in that at least one escape opening for an escape of the non-filtrate is provided at an angle diagonal to the tangent of the peripheral rim of the filter disc.

16. Centrifugal cleaning filter according to one of Claims 1 to 15, characterized in that two escape openings are provided per flow-moderating chamber.

17. Centrifugal cleaning filter according to Claim 16, characterized in that the two escape openings are arranged symmetrically in relation to a radius line of the filter disc.

18. Centrifugal cleaning filter according to one of Claims 1 to 17, characterized in that the connecting opening (6) is provided in the flow-moderating chamber at the greatest possible distance from the escape opening (7).

19. Centrifugal cleaning filter according to one of Claims 1 to 18, characterized in that the flow cross-section formed by at least one escape opening (7) is greater than the flow cross-section formed by the at least one connecting opening (6).

20. Centrifugal cleaning filter according to one of Claims 1 to 19, characterized in that at least one escape opening (7) is disposed just below the next, higher filter disc.

21. Centrifugal cleaning filter according to one of Claims 17 to 20, characterized in that the non-filtrate escapes from the two escape openings at angles which are opposite in relation to the radius line of the filter discs.

## Revendications

1. Filtre épurateur centrifuge comportant des disques filtrants (3) placés horizontalement les uns au-dessus des autres dans un récipient de filtration (1) sur un axe de rotation (10) et présentant une face supérieure perméable servant de surface filtrante et une couche inférieure imperméable servant à recevoir et évacuer le filtrat, et des conduites de distribution (4) réparties sur le pourtour des disques filtrants (3) qui conduisent le liquide à filtrer dans une direction principale de bas en haut et présentent chacune au moins un orifice de sortie (7) au-dessus d'au moins un disque filtrant (3), mais sur chaque disque filtrant (3) débouchant plusieurs orifices de sortie (7) répartis sur le pourtour, caractérisé par le fait que sur chaque conduite de distribution (4) est placée extérieurement au moins une chambre de stabilisation d'écoulement (5) s'étendant au moins sur une partie du pourtour de la conduite de distribution (4), au moins un orifice de communication (6) débouche de la conduite de distribution (4) dans la chambre de stabilisation d'écoulement (5), et les orifices de sortie (7) partent de la chambre de stabilisation d'écoulement (5), de sorte que le liquide à filtrer ne peut aller de la conduite de distribution (4) au disque filtrant (3) qu'en passant par la chambre de stabilisation d'écoulement (5).

2. Filtre épurateur centrifuge selon la revendication 1, caractérisé par le fait que les conduites de distribution (4) sont verticales.

3. Filtre épurateur centrifuge selon l'une des revendications 1 et 2, caractérisé par le fait que les conduites de distribution (4) sont jointes à la paroi (2) du récipient.

4. Filtre épurateur centrifuge selon l'une des revendications 1 et 2, caractérisé par le fait que les conduites de distribution (4) sont jointes aux disques filtrants.

5. Filtre épurateur centrifuge selon l'une des revendications 1 à 4, caractérisé par le fait que les conduites de distribution présentent des segments (23) joints aux disques filtrants.

6. Filtre épurateur centrifuge selon la revendication 5, caractérisé par le fait que les conduites de distribution (4) peuvent être assemblées à partir de segments (23) joints aux disques filtrants (3) par assemblage des disques filtrants en un dispositif de filtration.

7. Filtre épurateur centrifuge selon l'une des revendications 5 et 6, caractérisé par le fait qu'aux joints entre les segments (23) sont prévus des joints annulaires d'étanchéité (26).

8. Filtre épurateur centrifuge selon l'une des revendications 5 à 7, caractérisé par le fait que les segments (23) présentent au moins une chambre de stabilisation d'écoulement (5a).

9. Filtre épurateur centrifuge selon au moins une des revendications 1 à 8, caractérisé par le fait que la chambre de stabilisation d'écoulement est placée sous forme d'espace annulaire (5a) autour de la conduite de distribution (4).

10. Filtre épurateur centrifuge selon au moins une des revendications 1 à 9, caractérisé par le fait que les conduites de distribution (4) sont de section circulaire.

11. Filtre épurateur centrifuge selon au moins une des revendications 1 à 10, caractérisé par le fait que les conduites de distribution (4) sont formées d'un corps profilé (27) qui présente un conduit (31) pour le liquide à filtrer.

12. Filtre épurateur centrifuge selon la revendication 11, caractérisé par le fait que le corps profilé (27) présente au moins un évidement longitudinal contigu à son conduit (31) dans lequel est placée une barrette profilée (29) de section adaptée qui présente des évidements formant des chambres de stabilisation d'écoulement (5a).

13. Filtre épurateur centrifuge selon la revendication 12, caractérisé par le fait que l'évidement longitudinal et la barrette profilée sont de section triangulaire.

14. Filtre épurateur centrifuge selon l'une des revendications 1 à 13, caractérisé par le fait qu'au moins un orifice de sortie (7) est fait dans la chambre de stabilisation d'écoulement de la conduite de distribution (4) au-dessus de l'orifice de communication (6).

15. Filtre épurateur centrifuge selon l'une des revendications 1 à 14, caractérisé par le fait qu'au moins un orifice de sortie est prévu pour une sortie du liquide à filtrer oblique par rapport à la tangente au bord périphérique du disque filtrant.

16. Filtre épurateur centrifuge selon l'une des revendications 1 à 15, caractérisé par le fait qu'il est prévu deux orifices de sortie par chambre de stabilisation d'écoulement.

17. Filtre épurateur centrifuge selon la revendication 16, caractérisé par le fait que les deux orifices de sortie sont placés symétriquement par rapport à un rayon du disque filtrant.

18. Filtre épurateur centrifuge selon l'une des revendications 1 à 17, caractérisé par le fait que l'orifice de communication (6) de la chambre de stabilisation d'écoulement est prévu le plus loin possible de l'orifice de sortie (7).

19. Filtre épurateur centrifuge selon l'une des revendications 1 à 18, caractérisé par le fait que la section de passage formée par au moins un orifice de sortie (7) est plus grande que la section de passage formée par l'orifice ou les orifices de communication (6).

20. Filtre épurateur centrifuge selon l'une des revendications 1 à 19, caractérisé par le fait qu'au moins un orifice de sortie (7) est situé juste au-dessous du disque filtrant situé au-dessus.

21. Filtre épurateur centrifuge selon l'une des revendications 17 à 20, caractérisé par le fait que le liquide à filtrer sort des deux orifices de sortie sous des angles opposés par rapport au rayon des disques filtrants.
